# EUROPÄISCHE PATENTSCHRIFT

(11) **EP 0 397 836 B1**
(45) Veröffentlichungstag und Bekanntmachung des Hinweises auf die Patenterteilung: **31.01.1996**
(21) Anmeldenummer: 89912955.5
(22) Anmeldetag: 15.11.1989
(51) Int. Cl.: G01F 11/02

(54) **VOLUMENMESSGERÄT MIT HUBKOLBEN ZUR ABGABE DEFINIERTER FLÜSSIGKEITSMENGEN**
VOLUME FLOW MEASURING DEVICE WITH RECIPROCATING PISTON FOR DELIVERING DEFINED QUANTITIES OF LIQUID
APPAREIL DE MESURE DE VOLUME A PISTON ALTERNATIF POUR DELIVRER DES QUANTITES DEFINIES DE LIQUIDE

(30) Priorität: 15.11.1988 DE 3838741
(43) Veröffentlichungstag der Anmeldung: 22.11.1990
(73) Patentinhaber: Walter Graf u. Co. GmbH & Co., D-97877 Wertheim (DE)
(72) Erfinder: KNÖDEL, Erich, D-6980 Wertheim (DE)
(74) Vertreter: Klitzsch, Gottfried
(86) Internationale Anmeldenummer: EP8901373
(87) Internationale Veröffentlichungsnummer: WO9005895

(56) Entgegenhaltungen:
- CH-A- 197 246
- DE-A- 2 647 206
- DE-B- 1 061 216
- FR-A- 2 322 797

## Beschreibung

Die vorliegende Erfindung betrifft ein Volumenmeßgerät mit Hubkolben zur Abgabe definierter Flüssigkeitsmengen der im Oberbegriff des Patentanspruchs 1 genannten Art.

Derartige Volumenmeßgeräte werden sowohl zum genauen Dosieren flüssiger, insbesondere agressiver Medien als auch zum Titrieren eingesetzt. Diese Geräte sind zur Abgabe von Flüssigkeitsmengen vom Mikroliterbereich bis zum Literbereich ausgelegt.

Aus der deutschen Patentschrift DE 26 47 206 C3 ist ein Dosiergerät für Flüssigkeiten bekannt, das im wesentlichen aus einer Kolbenschieberpumpe und einem Ventilkopf besteht, und auf ein Vorratsgefäß aufsetzbar ist. Der Ventilkopf weist ein Auslaßventil und ein Einlaßventil auf. Beide Ventile sind als schwerkraftbeaufschlagte Kugelventile ausgeführt und parallel zueinander im wesentlichen senkrecht im Ventilkopf angeordnet. Das Einlaßventil ist mit einer Ansaugleitung versehen, die bis zum Grunde des Vorratsgefäßes reicht. Das Auslaßventil ist über einen Auslaßkanalstutzen nach außen geführt. Zur Entnahme einer bestimmten Flüssigkeitsmenge wird durch den Saugtakt der Kolbenschieberpumpe das Einlaßventil geöffnet, das Auslaßventil geschlossen und so der Dosierzylinder gefüllt. Wird anschließend durch eine Bewegungsumkehr der Kolbenschieberpumpe das Einlaßventil geschlossen, so erfolgt ein Entleeren des Dosierzylinders durch das geöffnete Auslaßventil und den Auslaßkanalstutzen in ein Auffanggefäß.

Nachteilig bei einem solchen Dosiergerät ist, daß beim Entnehmen von Flüssigkeit aus dem Vorratsgefäß in diesem allmählich ein Unterdruck entsteht, der eine weitere genau dosierte Entnahme erschwert und schließlich sogar ganz unmöglich macht. Deshalb wird in der Praxis der gas- und flüssigkeitsdicht mit dem Vorratsgefäß verschraubte Ventilkopf mit einem dünnen Belüftungskanal versehen, der den Innenraum des Vorratsgefäßes unmittelbar mit der Umgebungsatmosphäre verbindet. Auch diese Anordnung hat sich jedoch in der Praxis als nachteilig erwiesen. Nachdem bei der Entnahme von Flüssigkeit nach relativ kurzer Zeit ein Druckausgleich zwischen dem Vorratsgefäß und der Umgebungsatmosphäre stattgefunden hat, können unkontrolliert und nahezu ungehindert Partikel der im Vorratsgefäß befindlichen Flüssigkeit durch den Belüftungskanal difusionsartig in die Umgebungsatmosphäre gelangen. Da Dosiergeräte der in Rede stehenden Art vorzugsweise für chemisch äußerst agressive Medien, wie beispielsweise Salzsäure und Salpetersäure verwendet werden, ist dieses Verhalten vom Standpunkt des Umweltschutzes aus unvertretbar. Zusätzlich, und dies ist besonders bei der Verwendung von gattungsgemäßen Dosiergeräten in Reinstraumlaboratorien von Bedeutung, führt das unkontrollierte Austreten auch kleinster Flüssigkeitsmengen in Gasform zu korrosiven Belastungen bei höchstempfindlichen Meßgeräten und meßbar zur Verunreinigung bei vielen Labormaterialien.

Aus der FR-A-2 322 797 ist ein Volumendosierer für Flüssigkeiten bekannt, der einen Ausgießer, einen Ansaugkanal und einen Belüftungskanal für den Flüssigkeitsbehälter aufweist. Das Kugelventil des Belüftungskanals ist jedoch so angeordnet, daß es im entscheidenden Moment des Ansaugens der Flüssigkeit aus dem Behälter den Belüftungskanal schließt, so daß kein Druckausgleich stattfinden kann. Dieser ist erst nach Beendigung des Abfüllvorgangs möglich. Da dann das Kugelventil geöffnet bleibt, können ungehindert Gase aus dem Inneren des Behälters in die Umgebung austreten.

In der DE-B-1 061 216 ist ein Ventil für Kolbenpumpen-Dosiervorrichtungen offenbart, das aus einer Platte aus Filz oder ähnlichem Material besteht, die zwischen zwei Scheiben aus feiner Metallgaze gelagert ist. Schon aus diesem Aufbau wird deutlich, daß es sich hierbei um kein eigentliches "Ventil" handelt, sondern eher um einen semipermeablen Filter, der den Durchtritt der Außenluft in den Vorratsbehälter gestattet, jedoch den Austritt von Flüssigkeit aus dem Behälter verhindert. Auf diese Weise ermöglicht der Filter zwar einen ständigen Druckausgleich, doch können ebenso ständig Gase durch ihn hindurch aus- und eintreten.

Angesichts dieses Standes der Technik liegt der Erfindung die Aufgahe zugrunde ein Volumenmeßgerät mit Hubkolben der eingangs genannten Art für die Abgabe von definerten Flüssigkeitsmengen zu schaffen, das eine einfach herzustellende Belüftungsvorrichtung zur Erzielung eines Druckausgleiches zwischen Umgebungsatmosphäre und Vorratsgefäß aufweist, die gleichzeitig einen sicheren Schutz gegen ein ungewolltes Austreten auch kleinster Flüssig-keits- und Gaspartilkel aus dem Vorratsgefäß bietet.

Diese Aufgabe wird durch ein Volumenmeßgerät mit Hubkolben gemäß Patentanspruch 1 gelöst.

Das Volumenmesgerät der Erfindung besteht im wesentlichen aus einer Kolbenschieberpumpe und einem Ventilkopf, der gas- und flüssigkeitsdicht auf ein Vorratsgefäß, in der Regel eine Flasche, aufgeschraubt ist. Die Kolbenschieberpumpe weist vorzugsweise eine Skalierung oder Meßeinrichtung auf, um eine genau definierte Flüssigkeitsmenge aus dem Vorratsgefäß entnehmen zu können.

Im Ventilkopf sind je ein Einlaß- und Auslaßventil angeordnet, die beide vorzugsweise als Rückschlagventile ausgebildet sind. Diese Rückschlagventile sind wiederum vorzugsweise in herkömmlicher Weise als schwerkraftbeaufschlagte Kugelventile ausgeführt. Jedoch sind auch andere Ventile, die den Flüssigkeitsweg in einer Richtung sperren können, beispielsweise mit federkraftbeaufschlagte Kugelventile, denkbar.

Das Einlaßventil weist eine direkte Verbindung, beispielsweise einen Schlauchanschluß, zum Inneren des Vorratsgefäßes auf, wobei dieser Schlauchanschluß vorzugsweise bis zum Boden des Vorratsgefäßes reicht, um dieses vollständig leeren zu können. Das Auslaßventil weist einen Auslaufstutzen auf, durch den die aus dem Vorratsgefäß entnommene, in der Kolbenschieberpumpe dosierte Flüssigkeit abgegeben wird.

Beim Betätigen der Kolbenschieberpumpe wird das Einlaßventil durch den Druckunterschied zwischen dem Innenraum der Kolbenschieberpumpe und dem Vorratsgefäß geöffnet und der Innenraum der Kolbenschieberpumpe mit Flüssigkeit aus dem Vorratsgefäß gefüllt. Das Auslaßventil bleibt geschlossen. Wird anschließend der Innenraum der Kolbenschieberpumpe durch den Kolben verkleinert, wird das Einlaßventil geschlossen, das Auslaßventil geöffnet und die Flüssigkeit aus der Kolbenschieberpumpe nach außen in ein Auffanggefäß abgegeben.

Das Volumenmeßgerät mit Hubkolben zur Abgabe definierter Flüssigkeitsmengen der Erfindung weist im Ventilkopf eine Belüftungsvorrichtung zum Ausgleich des Druckunterschiedes zwischen Innenraum des Vorratsgefäßes und Umgebungsatmosphäre auf. Diese Belüftungsvorrichtung besteht aus einem Belüftungsventil, einem ersten Kanal, der die Sperrseite des Belüftungsventiles mit der Umgebungsatmosphäre verbindet, und einem zweiten Kanal, der die in Durchlaßrichtung weisende Seite des Belüftungsventiles mit dem Innenraum des Vorratsgefäßes verbindet.

Das Belüftungsventil selbst ist ein Rückschlagventil mit einem freien Ventilkörper, das in eine parallel zur Ventilkopfachse verlaufende Bohrung so eingesetzt ist, daß der Ventilkörper durch seine Schwerkraft in Sperrichtung beaufschlagt ist.

Die Bohrung, in die das Belüftungsventil eingesetzt ist, ist an ihrem zur Stirnseite des Ventilkopfes weisenden offenen Ende mit einer Verschlußkappe gas- und flüssigkeitsdicht verschlossen, so daß zum einen keine Flüssigkeit austreten kann und zum anderen im Innenraum der Bohrung unabhängig vom Umgebungsdruck der gleiche Druck wie im Innenraum des Vorratsgefäßes herrscht.

Das Ventil besteht, wie oben erwähnt, aus einem freien Ventilkörper und einem Ventilsitz. Der Ventilkörper weist dabei vorzugsweise die Form einer Kugel oder eines Kegels auf. Die geometrische Form ist jedoch völlig unbedeutend, solange in Zusammenarbeit mit dem Ventilsitz ein sicheres Schließen des Ventiles gewährleistet ist. Der Ventilsitz ist mit höchster Präzision zur Form des Ventilkörpers komplementär geschliffen und weist vorzugsweise eine Zentralbohrung auf. Diese Zentralbohrung erstreckt sich vom Grunde zum axial gegenüberliegenden Ende des Ventilsitzes. Alternativ hierzu sind mehrere solcher Bohrungen möglich. Wesentlich ist dabei, daß diese Bohrungen zuverlässig vom Ventilkörper abgedichtet werden können. Sowohl der Ventilsitz, als auch der Ventilkörper bestehen vorzugsweise aus einem korrosionsbeständigen und chemisch extrem widerstandsfähigen Material. Insbesondere haben sich dafür Achat, Rubin, Glas, alkalifreie Sinterkeramik und dergleichen als äußerst günstig erwiesen. Beim Material für den Ventilkörper ist zu beachten, daß neben der Korrosionsbeständigkeit eine bestimmte Dichte gefordert ist, um einerseits ein sicheres Verschließen der Zentralbohrung durch den Ventilkörper zu gewährleisten und andererseits ein öffnen des Ventiles schon bei geringem Unterdruck zu ermöglichen. Diese Anforderungen werden insbesondere, aber keineswegs ausschließlich, durch Ventilkörper aus Rubin erfüllt. Hinzu kommt, daß diese Werkstoffe preiswert, ausreichend hart und verschleißfähig und mit hoher Präzision zu schleifen sind.

Der Ventilsitz wird, vorzugsweise durch Preßsitz, ebenfalls gas- und flüssigkeitsdicht in der Bohrung des Ventilkopfes, der im übrigen selbstverständlich auch aus korrosionsbeständigem Material, insbesondere aus einem massiven PTFE-Block bestehen muß, gehalten.

Der Durchmesser des Ventilkörpers muß einen zumindest geringfügig kleineren Durchmesser als die Bohrung des Ventilkopfes, in der das Belüftungsventil sitzt, aufweisen, damit beim Einströmen der Luft aus der Umgebungsatmosphäre der Ventilkörper leicht vom Ventilsitz abheben kann, ohne sich in der Bohrung zu verklemmen, und damit die eingeströmte Luft leicht zwischen Ventilkörper und Innenwand der Bohrung in Richtung Innenraum des Vorratsgefäßes hindurchströmen kann.

Die Sperrseite des Belüftungsventiles, mit anderen Worten, das vom Ventilkörper abgewandte Ende der Zentralbohrung, steht über einen ersten Kanal in direkter Verbindung mit der Umgebungsatmosphäre. Der erste Kanal erstreckt sich dabei vorzugsweise zumindest im wesentlichen radial von der Ventilbohrung, bzw. der Verlängerung der Zentralbohrung des Ventilsitzes zur Außenwand des Ventilkopfes. Dadurch wird sowohl eine kompakte Bauform des Ventilkopfes ermöglicht, als auch der Strömungswiderstand für die einströmende Umgebungsluft gering gehalten.

Bei einer bevorzugten Ausführungsform des Volumenmeßgerätes der Erfindung weist dieser erste Kanal an seinem radial äußeren Ende eine Anschlußmöglichkeit für eine Zusatzvorrichtung, beispielsweise einen Luftfeuchtigkeitsabscheider, auf. Dies ist insbesondere von Bedeutung, wenn, in Reinstraumlaboratorien, die Flüssigkeit im Vorratsgefäß nicht verunreinigt werden darf. Diese Anschlußmöglichkeit kann beispielsweise in der einfachsten Form ein Innengewinde oder Luer-Lock oder ein Schlauchanschlußstutzen sein.

Der freie Innenraum der Ventilbohrung steht über einen zweiten Kanal in direkter Verbindung mit dem Innenraum des Vorratsgefäßes. Dieser zweite Kanal ist, vor allem aus fertigungstechnischen Gründen, als sog. Schrägkanal ausgeführt. Die Neigung dieses Schrägkanales gegenüber der Ventilkopfachse ist dabei so gewählt, daß die Verlängerung seiner Längsachse durch die stirnseitige öffnung der Ventilbohrung und/oder die zum Vorratsgefäß weisende Anschlußöffnung verläuft. Dadurch ist gewährleistet, daß, wenn der Ventilkopf aus einem massiven Block spanabhebend gefertigt wird, dieser zweite Kanal, beispielsweise durch die stirnseitige öffnung der Ventilbohrung, gebohrt werden kann oder, wenn der Ventilkopf beispielsweise im Spritzgießverfahren hergestellt wird, der entsprechende Kern vor der Entformung des Ventilkopfes ohne Schwierigkeiten gezogen werden kann.

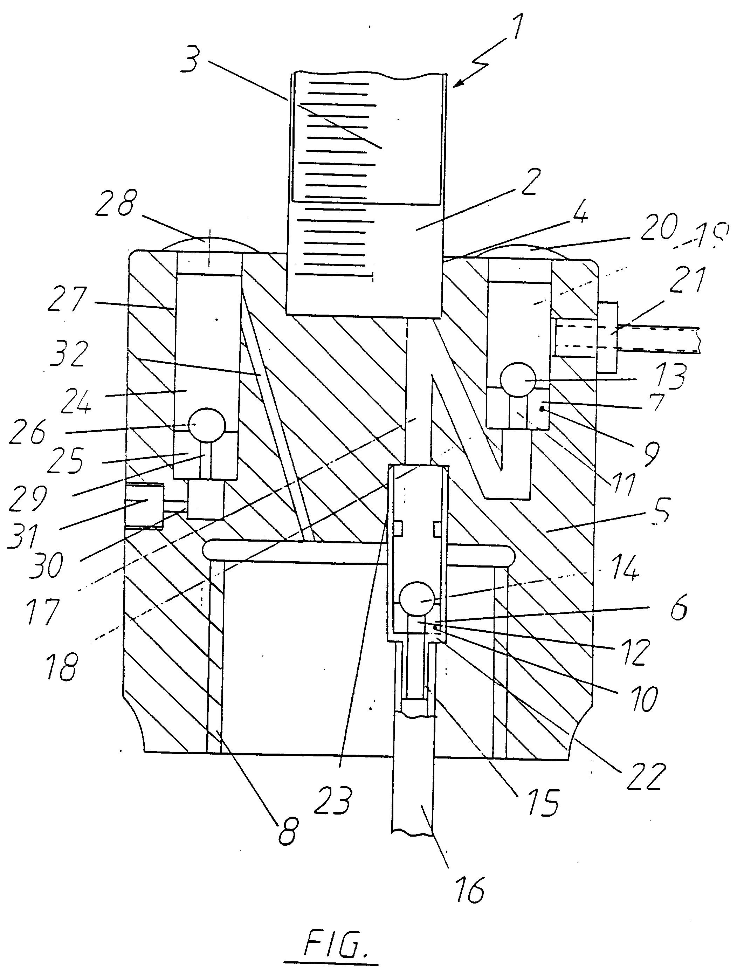

Der Anschluß des Ventilkopfes an das Vorratsgefäß erfolgt in an sich bekannter Weise beispielsweise über eine Schraubverbindung oder eine konische Steckverbindung. Im folgenden wird die Erfindung anhand eines in der Figur gezeigten Ausführungsbeispieles.des Volumenmeßgerätes mit Hubkolben näher erläutert.

Es zeigt die einzige
- Figur: ein Volumenmeßgerät mit Hubkolben gemäß vorliegender Erfindung im Längsschnitt.

Das in der Fig. gezeigte Volumenmeßgerät mit Hubkolben gemäß der vorliegenden Erfindung weist eine Kolbenschieberpumpe 1 auf. Die Kolbenschieberpumpe 1 besteht aus einem Dosierzylinder 2, aus Borosilikatglas und einem Hubkolben 3 aus Glas mit einer PTFE-Beschichtung. Zum genauen Ablesen der Dosierung ist der Dosierzylinder mit einer Skalierung versehen. Die Kolbenschieberpumpe 1 ist gas- und flüssigkeitsdicht in eine entsprechende Ausnehmung 4 eines Ventilkopfes 5 eingepreßt. Der Ventilkopf 5 selbst besteht aus einem massiven PTFE-Block und ist über einen Schraubanschluß 8 auf ein nicht dargestelltes Vorratsgefäß aufgesetzt.

Der Ventilkopf 5 weist ein Einlaßventil 6 und ein Auslaßventil 7 auf. Beide Ventile sind in an sich bekannter Weise als schwerkraftbeaufschlagte Kugelventile ausgeführt und achsparallel sowohl zueinander als auch zur Längsachse des Ventilkopfes 5 angeordnet. Die Ventilsitze 9,10 sind aus präzisionsgeschliffenem Borosilikatglas und weisen je eine Zentralbohrung 11,12 auf, die in Ruhestellung von den Kugeln 13,14 verschlossen werden. Die Kugeln sind aus Rubin.

Das Einlaßventil 6 weist an seiner Sperrseite eine Schlauchtülle 15 auf, auf die ein PTFE-Schlauch 16 aufgesteckt ist. Dieser PTFE-Schlauch 16 reicht bis zum Boden des nicht dargestellten Vorratsgefäßes. An seiner der Sperrseite gegenüberliegenden offenen Seite ist das Einlaßventil 6 über einen Kanal 17 mit der Kolbenschieberpumpe 1 verbunden. Das Einlaßventil 6 sitzt in einer Hülse 22, die durch Preßsitz in einer Ausnehmung 23 im Bodenbereich der Anschlußöffnung angeordnet ist. Von diesem Kanal 17 führtein weiterer Kanal 18 zur Sperrseite des Auslaßventiles 7.

Das Auslaßventil 7 sitzt in einer Bohrung 19 im Ventilkopf 5, die stirnseitig durch eine Kappe 20 hermetisch verschlossen ist. Die der Sperrseite des Auslaßventiles 7 gegenüberliegende Seite des Ventiles ist über einen Auslaßstutzen 21 mit der Umgebungsatmosphäre verbunden. Dieser Auslaßstutzen 21 dient zur Abgabe der dosierten Flüssigkeit aus dem Dosierzylinder 2 an ein nicht dargestelltes Auffanggefäß.

Im Ventilkopf 5 ist erfindungsgemäß ein drittes Ventil als Belüftungsventil 24 angeordnet. Dieses Belüftungsventil 24 ist bei diesem Ausführungsbeispiel ebenfalls ein schwerkraftbeaufschlagtes Kugelventil. Das Belüftungsventil 24 besteht im wesentlichen aus einem Ventilsitz 25 aus korrosionsfestem Borosilikatglas und einer Rubinkugel 26, deren Durchmesser geringer ist als der Innendurchmesser der Bohrung. Der Ventilsitz 25 ist durch Preßsitz gas- und flüssigkeitsdicht in eine Bohrung 27, die zur Stirnseite des Ventilkopfes 5 geöffnet ist, eingesetzt. Die Bohrung 27 wird nach Einsetzen des Ventiles 24 durch eine Verschlußkappe 28 ebenfalls gas-und flüssigkeitsdicht abgeschlossen.

Der Ventilsitz 25 weist einen in der Form der Rubinkugel 26 komplementär präzisionsgeschliffenen Bereich auf, dessen Grund in eine Zentralbohrung 29 mündet, die axial den Ventilsitz 25 durchdringt und mit einem ersten Kanal 30 verbunden ist. Dieser erste Kanal 30 führt radial nach außen unmittelbar zur Umgebungsatmosphäre. An seinem radial äußeren Bereich weist der erste Kanal 30 einen Bereich 31 mit Innengewinde auf. Daran kann beispielsweise ein Feuchtigkeitsabscheider angeschlossen werden.

Die Ventilbohrung 27 weist in ihrem axial äußeren Bereich eine Anschlußöffnung zu einem zweiten Kanal 32 auf. Dieser zweite Kanal 32 ist als Schrägkanal ausgeführt und reicht durch den Ventilkopf 5 bis hin zum Grund der Anschlußbohrung und ist somit direkt mit dem Innenraum der nicht dargestellten Vorratsflasche verbunden. Die Neigung des zweiten Kanals 32 ist dabei aus fertigungstechnischen Gründen so gewählt, daß dieser zweite Kanal 32 ohne Probleme durch die stirnseitige öffnung der Ventilbohrung 27 durch Bohren in den Ventilkopf 5 eingebracht werden kann.

Die Funktion dieses erfindungsgemäßen Volumenmeßgerätes ist dadurch gekennzeichnet, daß der beim Entnehmen von Flüssigkeit durch das Einlaßventil aus dem Innenraum des Vorratsgefäßes entstehende Druckunterschied zwischen Innenraum des Vorratsgefäßes und Umgebungsatmosphäre im Belüftungsventil die Kugel vom Ventilsitz abhebt, wodurch Luft aus der Umgebungsatmosphäre durch den ersten Kanal, die Zentralbohrung des Ventilsitzes und den zweiten Kanal in den Innenraum des Vorratsgefäßes einströmt, bis der Druckunterschied ausgeglichen ist. Nach Wegfall des Druckunterschiedes wird die Ventilkugel durch ihre Schwere gegen den Ventilsitz gedrückt und dichtet diesen nach außen ab, so daß der Innenraum des Vorratsgefäßes hermetisch gegen die Umgebungsatmosphäre abgeschlossen ist.

## Patentansprüche

1. Volumenmeßgerät mit Hubkolben zur Abgabe definierter Flüssigkeitsmengen, bestehend aus einer Kolbenschieberpumpe und einem Ventilkopf, der auf ein Vorratsgefäß aufsetzbar ist und ein Einlaßventil, ein Auslaßventil und eine Belüftungsvorrichtung aufweist, die aus einem Belüftungsventil (24), einem ersten Kanal (30), der die Sperrseite des Belüftungsventiles (24) das heisst, die in Durchlaßrichtung stromaufwärts liegende Seite des Belüftungsventiles mit der Umgebungsatmosphäre verbindet und einein zweiten Kanal (32), der die in Durchlaßrichtung stromabwärts liegende Seite des Belüftungsventiles (24) mit dem Innenraum des Vorratsgefäßes verbindet, besteht,
dadurch **gekennzeichnet**,
daß das Belüftungsventil (24) ein Rückschlagventil mit einem freien ventilkörper (26) ist, das in eine parallel zur Ventilkopfachse verlaufende Bohrung (27) so eingesetzt ist, daß der Ventilkörper (26) durch seine Schwerkraft in Sperrichtung beaufschlagt ist.

2. Volumenmeßgerät nach Anspruch 1,
dadurch **gekennzeichnet**,
daß die Bohrung (27) an ihrem zur Stirnseite des Ventilkopfes (5) offenen Ende durch eine Verschlußkappe (28) gas- und flüssigkeitsdicht verschlossen ist.

3. Volumenmeßgerät nach Anspruch 2,
dadurch **gekennzeichnet**,
daß der mit höchster Präzision zur Form des Ventilkörpers (26) komplementär geschliffene Ventilsitz (25) durch Preßsitz gas- und flüssigkeitsdicht gegen die Wand der Bohrung (27) gehalten ist und eine parallel zur Längsachse der Bohrung (27) verlaufende Zentralbohrung (29) aufweist.

4. Volumenmeßgerät nach Anspruch 3,
dadurch **gekennzeichnet**,
daß der Ventilsitz (25) aus Achat, Rubin, Glas oder alkalifreier Sinterkeramik besteht.

5. Volumenmeßgerät nach einem der Ansprüche 2 bis 4,
dadurch **gekennzeichnet**,
daß der Ventilkörper (26) aus Achat, Rubin oder alkalifreier Sinterkeramik mit vergleichbarer Dichte besteht und einen zumindest geringfügig kleineren Durchmesser als die Bohrung (27) aufweist.

6. Volumenmeßgerät nach einem der Ansprüche 2 bis 5,
dadurch **gekennzeichnet**,
daß sich der erste Kanal (30) zumindest im wesentlichen radial von der Bohrung (27) zur äußeren Wand des Ventilkopfes (5) erstreckt.

7. Volumenmeßgerät nach Anspruch 6,
dadurch **gekennzeichnet**,
daß der erste Kanal (30) an seinem radial äußeren Ende eine Anschlußmöglichkeit (31), insbesondere ein Innengewinde oder Luer-Lock oder einen Schlauchanschlußstutzen aufweist.

8. Volumenmeßgerät nach einem der Ansprüche 2 bis 7,
dadurch **gekennzeichnet**,
daß der zweite Kanal (32) so im Ventilkopf (5) angeordnet ist, daß die Verlängerung von der Längsachse durch die stirnseitige Öffnung der Bohrung (27) und/oder die zum Vorratsgefäß weisende Anschlußöffnung verläuft.

## Claims

1. Volume-measuring device with a reciprocating piston for delivering defined quantities of liquid, comprising a piston-slide pump and a valve head which can be placed on a storage vessel and has an inlet valve, an outlet valve and a ventilation device which comprises a ventilation valve (24), a first passage (30) which connects the shut-off side of the ventilation valve (24), i.e. that side of the ventilation valve which is situated upstream in the throughflow direction, to the surrounding atmosphere, and a second passage (32), which connects that side of the ventilation valve (24) which is situated downstream in the throughflow direction to the interior of the storage vessel, characterized in that the ventilation valve (24) is a nonreturn valve with a free valve element (26) which is inserted in such a way into a hole (27) running parallel to the axis of the valve head that the valve element (26) is acted upon in the shut-off direction by its weight.

2. Volume-measuring device according to Claim l, characterized in that, at its end open towards the end of the valve head (5), the hole (27) is closed in gas-tight and liquid-tight fashion by a closure cap (28).

3. Volume-measuring device according to Claim 2, characterized in that the valve seat (25), which is ground with the highest precision to a shape complementary to the shape of the valve element (26) is held gas - and liquid-tightly against the wall of the hole (27) by a press fit and has a central hole (29) running parallel to the longitudinal axis of the hole (27).

4. Volume-measuring device according to Claim 3, characterized in that the valve seat (25) is composed of agate, ruby, glass or alkali-free sintered ceramic.

5. Volume-measuring device according to one of Claims 2 to 4, characterized in that the valve element (26) is composed of agate, ruby or alkali-free sintered ceramic of comparable density and has an at least slightly smaller diameter than the hole (27).

6. Volume-measuring device according to one of Claims 2 to 5, characterized in that the first passage (30) extends at least essentially radially from the hole (27) to the outer wall of the valve head (5).

7. Volume-measuring device according to Claim 6, characterized in that, at its radially outer end, the first passage (30) has a connection means (31), in particular an internal thread or Luer lock or a hose connection stub.

8. Volume-measuring device according to one of Claims 2 to 7, characterized in that the second passage (32) is arranged in such a way in the valve head (5) that the extension of the longitudinal axis extends through the end opening of the hole (27) and/or the connection opening pointing towards the storage vessel.

## Revendications

1. Appareil de mesure de volume à piston alternatif pour délivrer des quantités définies de liquide, constitué d'une pompe à piston coulissant et d'une tête à soupapes, qui peut être installée sur un réservoir et comporte une soupape d'admission, une soupape de décharge et un dispositif d'aération qui est constitué d'une soupape d'aération (24), d'un premier canal (30) qui relie le côté blocage de la soupape d'aération (24), c'est-à-dire le côté de la soupape d'aération situé en amont dans la direction d'écoulement, avec l'atmosphère environnante et d'un deuxième canal (32) qui relie le côté de la soupape d'aération (24) situé en aval dans la direction d'écoulement à l'intérieur du réservoir,
caractérisé en ce
que la soupape d'aération (24) est une soupape de non-retour qui est pourvue d'un obturateur (26) libre et est insérée dans un perçage (27) parallèle à l'axe de la tête à soupapes de manière telle que l'obturateur de soupape (26) est entraîné par gravité dans la direction de blocage.

2. Appareil de mesure de volume selon la revendication 1,
caractérisé par le fait
qu'à son extrémité ouverte vers le côté frontal de la tête à soupapes (5), le perçage (27) est fermé de manière étanche aux gaz et aux liquides par un capuchon (28).

3. Appareil de mesure de volume selon la revendication 2,
caractérisé par le fait
que le siège de soupape (25), rodé avec une extrême précision pour qu'il ait une forme complémentaire de celle de l'obturateur (26), est maintenu par ajustage serré contre la paroi du perçage (27) de manière étanche aux gaz et aux liquides et comporte un perçage central (29) parallèle à l'axe longitudinal du perçage (27).

4. Appareil de mesure de volume selon la revendication 3,
caractérisé par le fait
que le siège de soupape (25) est en agate, en rubis, en verre ou en céramique frittée non alcaline.

5. Appareil de mesure de volume selon l'une des revendications 2 à 4,
caractérisé en ce que
l'obturateur de soupape (26) est en agate, en rubis ou en céramique frittée non alcaline d'une densité comparable et présente un diamètre au moins légèrement inférieur à celui du perçage (27).

6. Appareil de mesure de volume selon l'une des revendications 2 à 5,
caractérisé par le fait
que le premier canal (30) s'étend au moins pour l'essentiel radialement entre le perçage (27) et la paroi extérieure de la tête à soupapes (5).

7. Appareil de mesure de volume selon la revendication 6,
caractérisé par le fait
que le premier canal (30) comporte à son extrémité radialement extérieure, une possibilité de raccordement (31), en particulier un taraudage ou un raccord Luer ou une tubulure de raccordement de flexible.

8. Appareil de mesure de volume selon l'une des revendications 2 à 7,
caractérisé par le fait
que le deuxième canal (32) est disposé dans la tête à soupapes (5) de manière telle que le prolongement de l'axe longitudinal passe par l'orifice frontal du perçage (27) et/ou par l'orifice de raccordement tourné vers le réservoir.
